# EUROPEAN PATENT SPECIFICATION

(11) **EP 3 567 569 B1**
(45) Date of publication and mention of the grant of the patent: **01.12.2021**
(21) Application number: 17890472.8
(22) Date of filing: 20.12.2017
(51) Int. Cl.: G09B 27/08, G09B 27/00, G09F 13/20

(54) **GLOBE**
GLOBUS
GLOBE

(30) Priority: 04.01.2017 JP 2017008967
(43) Date of publication of application: 13.11.2019
(73) Proprietor: Murayama Corporation Limited, Nagano-shi, Nagano 380-0928 (JP)
(72) Inventor: MURAYAMA Katsuichi, Nagano-shi Nagano 380-0928 (JP)
(74) Representative: Cabinet Chaillot
(86) International application number: PCT/JP2017/046820
(87) International publication number: WO 2018/128137

(56) References cited:
- JP-A- H1 124 553
- JP-A- H07 104 653
- JP-A- H07 104 653
- JP-U- H 049 973
- JP-U- H 049 973
- JP-U- 3 186 463
- US-A- 4 588 384

## Description

### Field of the Invention

The present invention relates to a globe.

### BACKGROUND OF THE INVENTION

Conventionally, columns supporting a globe usually have a circular-arc shape. These columns show a latitude scale from the North Pole to the South Pole, that lines along the globe. It has a rotation function that was made to imitate the earth's rotation, but this mechanism can be very complicated. In addition, traditional globes are coated with coarse luminous material on the globe, that could post technical difficulties, in order to express a night scene of the earth. In order for the north direction of a shaft column to point the polar star, adjusting the angle and the azimuth of the shaft column also has technical difficulties.

In addition, adding a planetarium function to the rotatable shaft column of the globe has technical issues. Although there used to be a globe that a moon and globe together, a visual to properly show the locational relationship between the earth and other stars proved to be also difficult. A conventional globe can only express the earth only, therefore, it is very hard to convey that the earth is merely one of the celestial objects within our universe.

JP H07-104653 and JP H04-9973U both disclose globes according to prior art.

### BRIEF SUMMARY OF THE INVENTION

### Problems to be solved by the Invention

A conventional globe has its disadvantages mentioned below. First, in case when expressing the earth from the outer space, the circular-arc shape of the column-supporting the globe imparts a large sense of confusion to users since this does not exist in space. Second, the rotating function in order to imitate the earth's rotation, expressing daytime with inner light and nighttime with the luminous materials, and adding a planetarium function to the globe still have technical difficulties.

The present invention has been made in view of the above-mentioned problems, and has an object to provide a globe, which can rotate and express daytime and nighttime while feeling that the earth is floating within the universe while also comprising a planetarium function that is capable of projecting the stars near the polar star onto the wall when a night scene is projected.

### Means for solving the problem

The present application concerns globe as defined in independent claim 1. In order to solve the above-mentioned issues, the globe of the present invention comprises an liner shaft column, which extends from the North Pole to the South Pole, inside the globe. The liner shaft column makes it possible to support the globe while rotating, causing the outside column with a circular-arc shape from previous globes unnecessary. To prevent a shadow of the inner shaft column from being projected onto the inner surface of the globe by using only one inner light, a plurality of LED lights are arranged on the surface of the shaft column. In addition, its spherical body has a coarse inner surface so that lights from the LED lights are irregularly reflected on the inner surface and its inner brightness is equalized with the coarse inner surface. This inner surface can also prevent the shadow of the inner shaft column from being projected onto the inner surface of the spherical body. The globe comprises a light-transmitting hollow spherical body having the earth map thereon and an opening on the bottom side, a plurality of built-in LED lights inside the spherical body, a driving unit that is capable of rotating the spherical body, a support base for supporting the spherical body rotatably, and a long shaft column whose one side is attached to the supporting base and the other side is inserted into the opening of the spherical body, wherein the opening has an opening area into which the shaft column being equipped with the LED lights and the driving unit is inserted.

Furthermore, a small planetarium projector can be attached to the top part of the shaft column so that the globe can project the polar star to the position extending from the shaft column and can project other stars such as North Dipper Seven Stars and the Cassiopeia constellation near the polar star onto the wall.

### DETAILED DESCRIPTION OF THE INVENTION

### (Embodiment)

Referring to the drawings, the Embodiment of a globe according to the present invention will be explained.

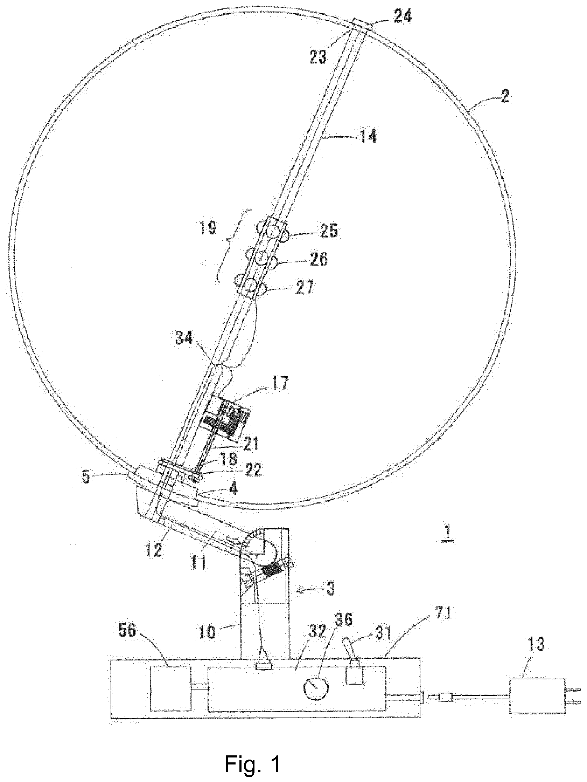

As shown in Fig. 1, this globe 1 comprises a spherical body 2 and a base 3.

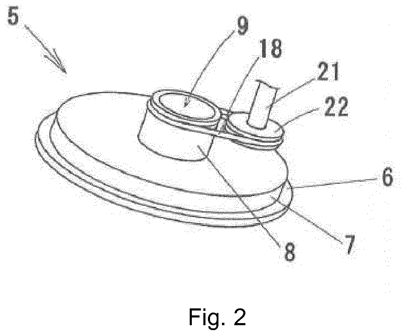

The spherical body 2 is made of a light transparent material and has a hollow space inside. The earth map is attached to the outer surface of the spherical body 2 and the inner surface of the spherical body 2 is coarse in order to scatter light. A round opening 4 is formed at the bottom part, which corresponds to the position of the Antarctic, of the spherical body 2. A spherical body supporting part 5, which is made of metal, shown in Fig. 2 is detachably fitted to the opening 4. As shown in Fig.2, the spherical body supporting part 5 comprises a base part 6 in order to close the aperture area of the opening 4, a side wall 7 being concentrically raised from the base part 6, and a belt receiving side wall 8, wherein the spherical body supporting part 5 has an insertion hole 9 in which a shaft column 14 is inserted.

The base 3 supports the spherical body 2 rotatably. The base 3 comprises a stand 71 made of materials with sufficient strength such as metal, glass, wood, resin and the like, a base vertical column 10, and a shaft column-supporting arm 11 made of materials with sufficient strength and connected to the base vertical column 10. In this case, a guide groove 12, which is opened downwards, is formed at the lower side of the shaft column-supporting arm 11 in order to insert a bundled wire 34 in it. Also, one end of the metal shaft column 14 is inserted into a thick wall part of the shaft column-supporting arm 11.

The shaft column 14 supports not only the top part of the spherical body 2, but also a geared motor 17 and a LED unit 19. Furthermore, in a state where the top part of the shaft column 14 is inserted in a topside opening 23, which is the opposing side of the opening 4, of the spherical body 2, a come-off prevention cap 24 having a male screw is fixed to the top part of the shaft column 14 with a female screw. Herein, the shaft column 14 with the geared motor 17 and a plurality of LED lights can be inserted in the opening 4.

The geared motor 17 that corresponds to a driving unit of the present invention is attached to the shaft column 14 with a screw. The rotating speed of a built-in motor will decrease with the use of a constant gear ratio according to the built-in gear. The geared motor 17 comprises a driving shaft 21 and a driving pulley 22, wherein the spherical body supporting part 5 and the spherical body 2 are rotated by transmitting a driving force on the geared motor 17 to the driving pulley 22 and a belt 18.

In terms with electric power, AC is converted to DC by using an AC-DC conversion adapter 13 and the DC flows to a control circuit 32 by a power switch located at the lower part of the base 3. The control circuit 32 outputs power to rotate the spherical body 2, power for the LED unit 19 and light control signals. These power and signals are transmitted to the geared motor 17 and the LED unit 19 via a bundled wire 34, which is guided to the inner space of the spherical body 2 through the base 3, the guide groove 12 of the shaft column-supporting arm 11 and the shaft column 14. The LED unit 19 consists of LED Red 25, LED Green 26 and LED Blue 24 (hereinafter these are written as RGB), each colour has four lights connected in series.

Next, referring to Fig. 1 and Fig. 2, how to use the globe 1 will be mentioned below.

In case when the power switch 31 is turned on, output voltage according to the level of a rotation speed control volume 36, which is equipped with the control circuit 32, is provided to the geared motor 17 via the bundled wire 34. With this configuration, the geared motor 17 can start to rotate and its driving force is conveyed to the driving pulley 22 and the belt 18. This results in rotating the spherical body supporting part 5 and the spherical body 2 in order to express the rotation of the earth. The RGB colour and brightness controlled by a CPU are outputted to the LED unit 19 based on PWM via the bundled wire 34. In addition, because the light from the LED unit 19 can transmit through the spherical body 2, the spherical body 2 can create a fantasy world as if the shining earth was floating within the universe in a dark room. In this case, this globe 1 avoids having a shadow of the shaft column 14 with the LED unit 19 comprising a plurality of LED lights. The light from the LED unit 19 will be irregularly reflected on the inner surface of the spherical body 2 so that the shadow of the shaft column 14 is hardly seen. As a result, in case when observing the globe 1 from the outside, the whole spherical body 2 emits light uniformly so that the appearance of the globe 1 becomes extremely beautiful.

Next, a control of a plurality of LED lights performing an internal illumination of this rotatable globe 1 and a night scene with luminous coating materials will be explained.

The internal illumination of this globe 1 is performed with the LED unit 19. In this configuration, the LED units 19 has four of each LED-Red 24, LED-Green 25, LED-Blue 27 and the total number is 12 LED lights. The brightness of each LED light is controlled by a flow of the program performed by CPU based on PWM. The electric power according to the white colour of the sun is provided to RGB in order to express daytime, then gradually weakening the electric power for LED-Green 25 and LED-Blue 27 to create madder red, and then lessening the electric power for LED-Red 24 and shifting all-electric power shift to zero in order to express nighttime. Subsequently, the luminous coating materials, which are coated on the positions corresponding to big cities of the surface of the spherical body 2, will start to gleam to reveal a night scene of the earth. This can create a mysterious atmosphere in a dark space with the slow rotation of the spherical body 2. After a while, the electric power to LED-Red and LED-Green would gradually increase based on PWM in order to express the colour of dawn from the night. And finally, the electric power to LED-blue will also gradually increase in order to express the white colour of daytime.

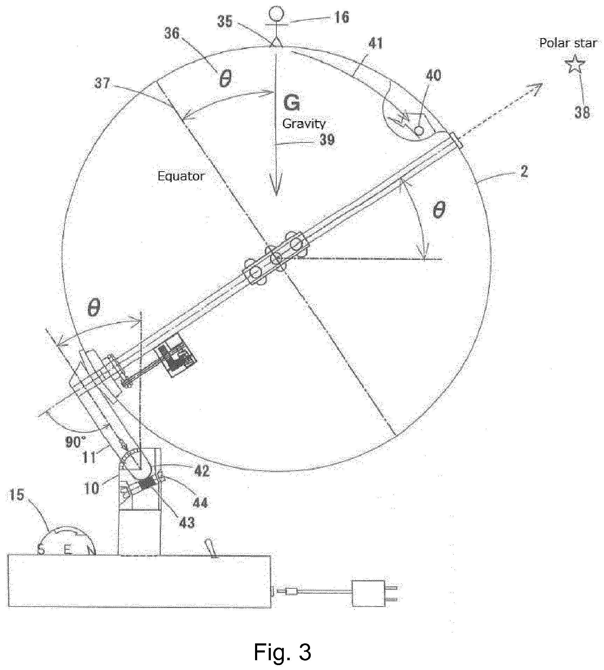

Next, referring to Fig. 3 to Fig. 5, the globe 1, which is capable of controlling an angle of the shaft column 2, according to claim 2 will be explained.

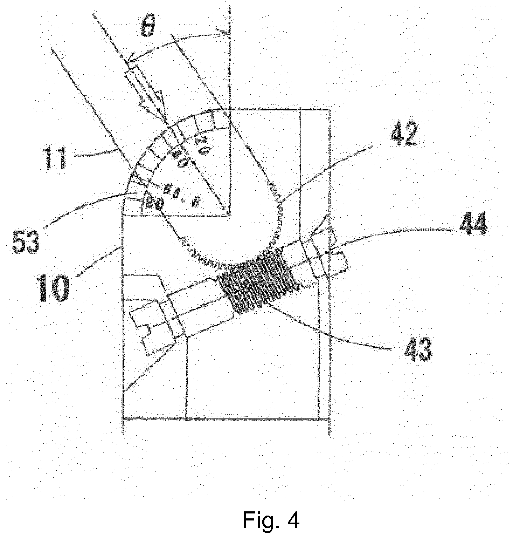

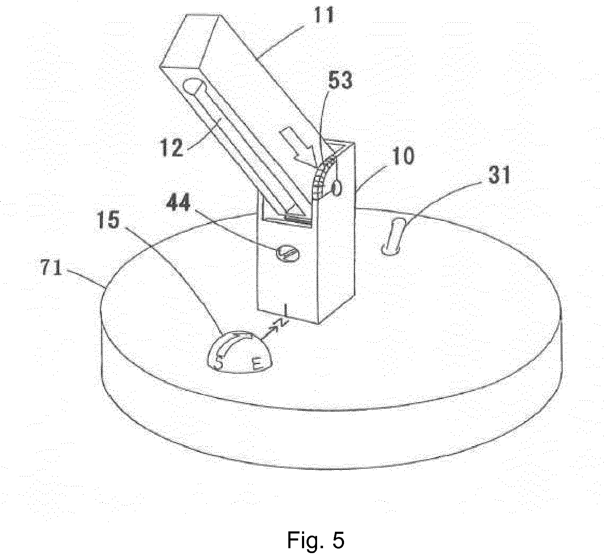

First, referring to Fig.4, a mechanism to change the angle of the shaft column 14 will be explained. One side of the shaft column-supporting arm 11 is formed as a worm 42, and the worm 42 is engaged with a worm gear 43 having a shaft column angle adjusting screw 44 placed in the base vertical column 10. With turning the screw 44, it is possible to shift the latitude where you live to the top of the globe 1. Since the shaft column 14 is attached to the shaft column-supporting arm 11 in a right angle, the angle θ between the shaft column-supporting arm 11 and the vertical line of the base vertical column 10 is in accordance with a tilt θ of the shaft column 14 from a horizontal plane. Oneself feels gravity directly downward and the centre of the earth is located on the line of gravity. This means that the present self is located at the top of the globe 1 (the earth). As shown in Fig. 3 and Fig. 4, it is required to keep turning the screw 44 in order for the shaft column 14 to tile the latitude angle θ to your exact location. Then, as shown in Fig. 5, it is required to turn the base 3 in order for the needle of a compass 15 to point to the centre of the base vertical column 10. As a result, the longitude where you locate on the globe map will be located at the top of the spherical body 2. With this configuration, the present self can be located at the top of the globe 1 so that the whole globe is located under the present self. This makes it easy to understand directions of big cities on the earth and is easily thought that the polar star is positioned on the extended line from the shaft column 14. In case of Fig. 3, the position of the present self 35 is in Tokyo. And the latitude and the longitude of Tokyo are located at the top of the globe 1 where the shaft column 14 is adjusted to point the column 14 at the magnetic north. With this, the direction from the one's own present position, which is the top of the globe 1, to Anchorage is to be understood by drawing a line from Tokyo to Anchorage in Alaska. And it is to be understood that the polar star is positioned far away on the extended line from the shaft column 14.

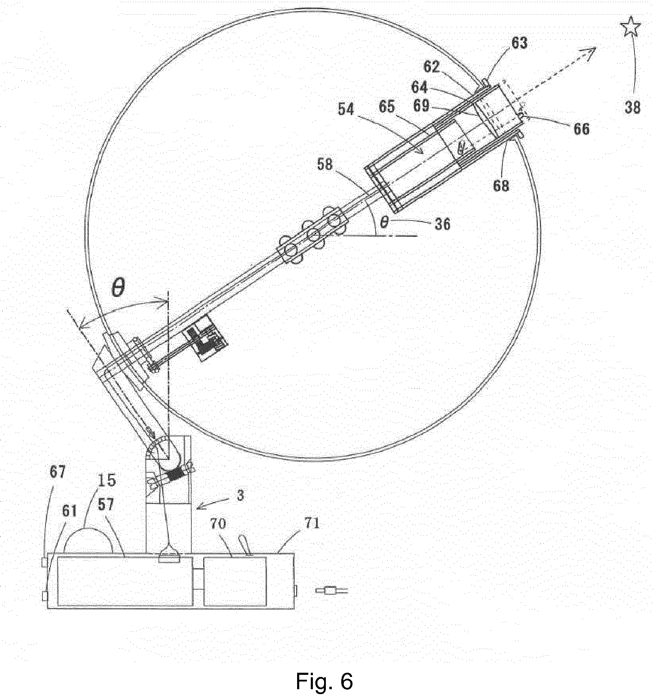

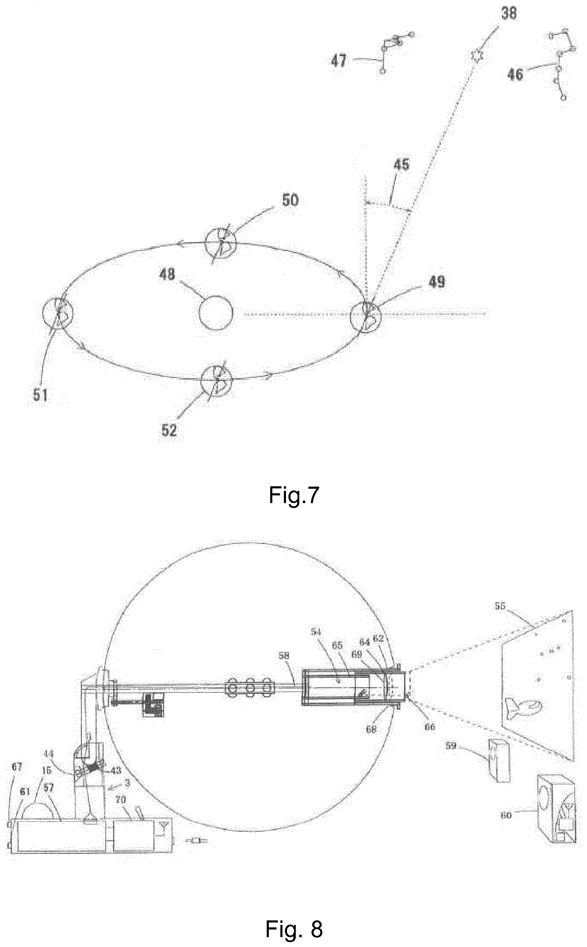

Next, referring to Fig.6 and Fig.8, a LED projector according to claim 3, which can be attached to the globe 1, will be explained. Referring to Fig.7, the revolution of the earth round the sun will also be explained.

The structure of the spherical body 2, the base 3, and the shaft column 14 is shown in Fig.6. A fixed case for the projector 62 is attached to the upper part of the shaft column 14 and a sphere slipping out preventing ring 63 is engaged with the projector fixing case 62 in order for the spherical body 2 not to slip out from a sphere's upper opening 68. A LED projector 54 is attached in the projector fixing case 62 and the LED projector 54 is composed of a LED projector built-in inner cylinder 65 and an outer cylinder with lens 64. A outer cylinder focusing knob 66 is attached to one end of the outer cylinder with lens 64 so that the images can be focused by using this. In this case, the latitude and the longitude of a present self is located at the top of the spherical body 2 by adjusting the tilt of the shaft column 14. In addition, the base 3 is turned to the north by using the compass 15 so that the longitude of the present self can be adjusted to the top of the spherical body 2. With this configuration, the polar star 38 is projected in the north direction of the shaft column 14. Although the polar star 38 does not move its position while the earth is rotating, the stars around the polar star 38 are rotating counterclockwise around the polar star 38 according to the earth's rotation. Herein, a celestial concept will be explained by referring to Fig.7. The earth makes one revolution around the sun in a year, Fig. 7 shows the earth on the winter solstice 49, the earth on the spring equinox 50, the earth on the summer solstice 51 and the earth on the autumnal equinox 52. The tilt of the earth 45 against a plane being vertical to a revolving plane is 23.4 degree. The polar star 38 is located on a line extending from the earth's axis. If the exact date and time are notified, polar coordinate data, which relates to the stars around the polar star, can be obtained by calculating how far each star moves around the polar star 38 based on the date and time. Then the polar coordinate data are converted into projector projection video signals. As a result, the LED projector 54 makes it possible to project the correct position of the North Dipper Seven Stars, Cassiopeia constellation and the like. Herein, the flow of the signals will be explained. GPS signals are connected to a GPS signal input connector 67 in the bottom left-hand side of the base 3. With this configuration, a projector video audio circuit 57 can convert polar coordinate data, which is calculated based on the exact date and time from the GPS data, into projector projection video signals. As a result, the LED projector 54 can project the exact azimuth of the stars at the time.

The case when the globe 1 is used as a big screen projector will be explained with referring to Fig.8. The LED projector 54 is usually used in a horizontal direction or by tilting it slightly upward. However, the projecting angle of the projector 54 can be adjusted by turning the shaft column angle adjusting screw 44. The video images on a projector screen 55 can be focused by turning the outer cylinder focusing knob 66. The video and stereo sound signals, which are input in a video audio signal input connector 61 of the base 3, are processed by the projector video audio circuit 57. The video signals are connected to the LED projector 54 via a projector bundled wire 58 and are projected on the projector screen 55. The audio signals, which are processed by the projector video audio circuit 57, are broadcasted by a stereo audio transmitting circuit 70. The audio signals, which are received at a speaker box 59 comprising a left audio circuit and a battery, are output from the speaker box 59 after being amplified by a receiving circuit inside the speaker box 59. The right audio sound is outputted from a speaker box 60 the same as the left audio sound.

Herein, it is to be understood that the embodiments described herein are not intended as limiting, or encompassing the entire scope of the present invention. For example, the geared motor 17, a plurality of LED lights 19 and the earth axis 16 are not intended as limiting, or encompassing the entire scope of the present invention. Furthermore, in a state where the geared motor 17 and a plurality of LED lights 19 are attached to the shaft column 14, a planar shape of these components seen from the opening 14 is not necessary to be within the size of the opening surface of the opening 4. In case of removing the spherical body 2 from the shaft column 14, the shaft column 14 can be removed from the spherical body 2 by adjusting the position of the spherical body 2 in a traverse direction without the spherical body 2 touching the parts of the shaft column 14. In addition, forming the shape of the geared motor 17 and the LED lights more slender, it can narrow the opening area of the opening 4. With this, the area without the map in the bottom of the globe 2 can be smaller. Furthermore, it is possible to set a driving unit outside the spherical body 2. In this case, the geared motor 17 is stored in a supporting base. The driving shaft 21 and the driving pulley 22 are arranged upwardly. A pulley is arranged in the bottom side of the spherical body supporting part 5. And a belt is laid between the pulley and the driving pulley 22.

In this embodiment, the map is attached to the outer surface of the spherical body 2. However, as far as the globe 1 according to the present invention is concerned, a colour film can be attached to the outer surface of the spherical body 2 or the earth map can also be printed on the outer surface of the spherical body 2. The luminous materials are not always coated but also printed on the outer surface of the spherical body 2.

### Effects of the Invention

This invention makes it possible to feel the real earth from outer space as if the globe 1 having the inner lights that makes it seem like it is floating within the universe in a dark room. In addition, this invention also makes us feel the beautiful earth within the universe with its colour cycle changed by the LED control, which is not realized by conventional globes. The colour of the globe 1 gradually transfers from daytime to madder red showing dusk, and from dusk to the night scene of the earth with the luminous materials gleaming, and then from nighttime to the colour of dawn, and then from dawn to daytime with the lapse of time. Furthermore, in case when the planetarium function is added to the globe 1, the polar star is projected on a line extending from the shaft column 14, and the globe 1 makes it possible for us to feel the universe with the stars around the polar star and the earth's rotation.

### Industrial applicability of the invention

In this era of globalization, a high functioning globe is becoming more and more important not only for appreciation but also for business purposes. For example, in case when this globe 1 presents in a meeting room, it can be used not only as a globe, but also as a projector projecting the PC screen and video on a big screen with stereo sounds. This concludes that this invention has applicability such as a presentation tool for a meeting.

### BRIEF DESCRIPTION OF THE DRAWINGS

Fig. 1 is a cross section view of a globe according to an embodiment of the present invention.
Fig. 2 is an enlarged perspective view of a spherical body supporting part and a driving shaft according to the embodiment of the present invention.
Fig. 3 is a whole cross section view where the angle of a shaft column of the globe according to the embodiment of the present invention is adjustable.
Fig. 4 is an enlarged cross section view of a function where the angle of the shaft column of the globe, according to the embodiment of the present invention, is adjustable.
Fig. 5 is an enlarged perspective view of an adjusting function which can locate the latitude and the longitude of oneself are located at the top of the globe and adjust oneself's direction correctly where the angle of the shaft column of the globe, according to the embodiment of the present invention, is adjustable.
Fig. 6 is a cross section view of the globe having a planetarium function according to the embodiment of the present invention.
Fig. 7 is a conceptual view of the revolution of the globe round the sun and the tilt of the earth according to the embodiment of the present invention.
Fig. 8 is a conceptual view of a usage sample where the projector is equipped with the globe according to the embodiment of the present invention.

### Numerical References

- 1: Globe
- 2: Spherical body
- 3: Base
- 4: Opening at the bottom part of the spherical body
- 5: Spherical body supporting part
- 6: Base part
- 7: Side wall
- 8: Belt receiving side wall
- 9: Insertion hole
- 10: Base vertical column
- 11: Shaft column supporting arm
- 12: Guide groove
- 13: AC adapter
- 14: Shaft column
- 15: Compass
- 16: Present self image on the top of the earth
- 17: Geared motor
- 18: Belt
- 19: LED unit (LED light)
- 21: driving shaft
- 22: driving pulley
- 23: Spherical topside opening
- 24: Cap
- 25: LED Red
- 26: LED Green
- 27: LED Blue
- 31: Power switch
- 32: Control circuit
- 34: Bundled wire
- 35: Present self image after shifting the latitude and longitude to the top of the globe
- 36: Latitude angle of the present self
- 37: Equator
- 38: Polar star
- 39: Direction of the gravity that the present self feels
- 40: Anchorage
- 41: Direction of Anchorage from the present self
- 42: Worm
- 43: Worm gear
- 44: Shaft column angle adjusting screw
- 45: Angle of the tile of the earth (23.4 degree)
- 46: North Dipper Seven Stars
- 47: Cassiopeia
- 48: Sun
- 49: Earth on the winter solstice
- 50: Earth on the spring equinox
- 51: Earth on the summer solstice
- 52: Earth on the autumnal equinox
- 53: Light-transmitting latitude scale
- 54: LED projector
- 55: Projector screen
- 56: Built-in battery
- 57: Projector video audio circuit
- 58: Projector bundled wire
- 59: Speaker box comprising a left audio circuit and a battery
- 60: Speaker box comprising a right audio circuit and a battery
- 61: Video audio signal input connector
- 62: Fixed case for the projector
- 63: Sphere slipping out preventing ring
- 64: Outer cylinder with lens
- 65: LED projector built-in inner cylinder
- 66: Outer cylinder focusing knob
- 67: GPS signal input connector
- 68: Sphere's upper opening
- 69: lens
- 70: Stereo audio transmitting circuit
- 71: Stand

## Claims

1. A globe (1) comprising:
a light-transmitting hollow spherical body (2) having the earth map thereon and a luminous coating material thereon to express a night scene of the globe (1);
a rotation unit that is capable of rotating the spherical body slowly around an axis line extending from the North Pole to the South Pole of the globe (1) by using a geared motor (17);
a shaft column (14) having a plurality of LED lights (25, 26, 27) that are arranged on a surface of the shaft column (14) in order to prevent a shadow of the shaft column (14) from being projected onto an inner surface of the spherical body (2);
a control unit (32) which is capable of creating daytime condition by making the LED lights (25, 26, 27) shining brightly and of creating nighttime condition by making the LED lights weakening gradually and then of creating a night scene of the earth with the luminous coating material, which stores energy from the LED lights (25, 26, 27), gleaming; and
a mechanism, which is attached to a base (3), to change the angle of the shaft column (14) of the globe (1); **characterised in that** the globe (1) further comprises a compass (15), which is used as a pointer, to adjust an azimuth of the shaft column (14);
wherein the mechanism makes it possible to locate the polar star (38) to a position extending from the shaft column (14) by changing the angle of the shaft column (14) from horizon to a latitude (36) of one's own present position (35) and changing the direction of the shaft column (14) to the north, and
wherein it is possible to understand directions to big cities on earth from the one's own present position (35) with making a direction of gravity (39) from the top of the earth to the centre of the earth correspond to a direction of gravity (39) that the present self (35) feels, while rotating the globe (1) in order for locating the longitude of the present self (35) to the top of the globe (1),
and a projector (54) locating in the northern part of the shaft column (14) of the globe (1), wherein the projector (54) can provide a planetarium that projects the polar star (38) and the stars including North Dipper Seven Stars (46) onto a near wall when the projector (54) turns on, and
the projector (54) can also project various moving images and still images onto the wall.

## Patentansprüche

1. Globus (1), umfassend:
einen lichtdurchlässigen kugelförmigen Hohlkörper (2) mit der Erdkarte darauf und einem leuchtenden Beschichtungsmaterial darauf, um eine Nachtszene des Globus (1) darzustellen;
eine Rotationseinheit, die in der Lage ist, den kugelförmigen Körper mit Hilfe eines Getriebemotors (17) langsam um eine vom Nordpol zum Südpol des Globus (1) verlaufende Achsenlinie zu drehen;
eine Wellensäule (14) mit einer Vielzahl von LED-Leuchten (25, 26, 27), die auf einer Oberfläche der Wellensäule (14) angeordnet sind, um zu verhindern, dass ein Schatten der Schachtsäule (14) auf eine innere Oberfläche des kugelförmigen Körpers (2) projiziert wird;
eine Steuereinheit (32), die in der Lage ist, einen Tageszustand zu erzeugen, indem sie die LED-Leuchten (25, 26, 27) hell leuchten lässt, und einen Nachtzustand zu erzeugen, indem sie die LED-Leuchten allmählich schwächer werden lässt, und dann eine Nachtszene der Erde mit dem leuchtenden Beschichtungsmaterial zu erzeugen, das Energie von den LED-Leuchten (25, 26, 27) speichert und das gläntz; und
einen Mechanismus, der an einer Basis (3) befestigt ist, um den Winkel der Wellensäule (14) des Globus (1) zu verändern; **dadurch gekennzeichnet, dass** der Globus (1) ferner umfasst
einen Kompass (15), der als Zeiger verwendet wird, um einen Azimut der Wellensäule (14) einzustellen;
wobei der Mechanismus es ermöglicht, den Polarstern (38) an einer von der Wellensäule (14) ausgehenden Position zu lokalisieren, indem der Winkel der Wellensäule (14) vom Horizont bis zu einem Breitengrad (36) der eigenen gegenwärtigen Position (35) geändert und die Richtung der Wellensäule (14) nach Norden geändert wird, und
wobei es möglich ist, Richtungen zu großen Städten auf der Erde von der eigenen gegenwärtigen Position (35) aus zu verstehen, indem man eine Richtung der Schwerkraft (39) vom Scheitelpunkt der Erde zum Mittelpunkt der Erde mit einer Richtung der Schwerkraft (39), die das gegenwärtige Ich (35) fühlt, übereinstimmt, während man den Globus (1) dreht, um den Längengrad des gegenwärtigen Ichs (35) zum Scheitelpunkt des Globus (1) zu lokalisieren,
und einen Projektor (54), der im nördlichen Teil der Wellensäule (14) des Globus (1) angeordnet ist, wobei der Projektor (54) ein Planetarium bereitstellen kann, das den Polarstern (38) und die Sterne, einschließlich der Sieben Sterne des Nördlichen Wagens (46), auf eine nahe gelegene Wand projiziert, wenn der Projektor (54) eingeschaltet wird, und
kann der Projektor (54) auch verschiedene bewegte und unbewegte Bilder an die Wand projizieren.

## Revendications

1. Globe (1) comprenant :
un corps sphérique creux (2) transmettant la lumière, sur lequel se trouvent la carte de la terre et un matériau de revêtement lumineux pour exprimer une scène de nuit du globe (1) ;
une unité de rotation qui est apte à faire tourner le corps sphérique lentement autour d'une ligne d'axe s'étendant du pôle nord au pôle sud du globe (1) en utilisant un motoréducteur (17) ;
une colonne d'arbre (14) ayant une pluralité de lumières DEL (25, 26, 27) qui sont disposées sur une surface de la colonne d'arbre (14) de façon à empêcher une ombre de la colonne d'arbre (14) d'être projetée sur une surface interne du corps sphérique (2) ;
une unité de commande (32) qui est apte à créer une condition de journée en amenant les lumières DEL (25, 26, 27) à briller fortement et à créer une condition nocturne en amenant les lumières DEL à faiblir progressivement puis à créer une scène de nuit de la terre avec le matériau de revêtement lumineux, lequel stocke de l'énergie provenant des lumières DEL (25, 26, 27), qui luit ; et
un mécanisme, qui est attaché à une base (3), pour changer l'angle de la colonne d'arbre (14) du globe (1) ; **caractérisé par le fait que** le globe (1) comprend en outre
un compas (15), qui est utilisé comme pointeur, pour ajuster un azimut de la colonne d'arbre (14) ;
dans lequel le mécanisme rend possible de localiser l'étoile polaire (38) à une position s'étendant à partir de la colonne d'arbre (14) en changeant l'angle de la colonne d'arbre (14) de l'horizon à une latitude (36) de sa propre position actuelle (35) et en changeant la direction de la colonne d'arbre (14) vers le nord, et
dans lequel il est possible de comprendre des directions vers des grandes villes sur terre à partir de sa propre position actuelle (35) en amenant une direction de gravité (39) du sommet de la terre au centre de la terre à correspondre à une direction de gravité (39) que l'on (35) ressent, tout en faisant tourner le globe (1) afin de localiser la longitude de soi-même (35) au sommet du globe (1), et
un projecteur (54) situé dans la partie nord de la colonne d'arbre (14) du globe (1), le projecteur (54) pouvant présenter un planétarium qui projette l'étoile polaire (38) et les étoiles comprenant les sept étoiles de la grande ourse (46), sur un mur proche lorsque le projecteur (54) est allumé, et
le projecteur (54) pouvant également projeter diverses images mobiles et images fixes sur le mur.
